# EUROPÄISCHE PATENTSCHRIFT

(11) **EP 1 236 301 B1**
(45) Veröffentlichungstag und Bekanntmachung des Hinweises auf die Patenterteilung: **23.02.2005**
(21) Anmeldenummer: 00987199.7
(22) Anmeldetag: 07.12.2000
(51) Int. Cl.: H04L 1/18

(54) **VERFAHREN ZUR PAKETORIENTIERTEN DATENÜBERMITTLUNG IN EINEM FUNK-KOMMUNIKATIONSSYSTEM**
METHOD FOR PACKET-ORIENTED DATA TRANSMISSION IN A RADIO COMMUNICATION SYSTEM
PROCEDE DE TRANSMISSION DE DONNEES PAR PAQUETS DANS UN SYSTEME DE COMMUNICATION RADIO

(30) Priorität: 08.12.1999 DE 19959160
(43) Veröffentlichungstag der Anmeldung: 04.09.2002
(73) Patentinhaber: SIEMENS AKTIENGESELLSCHAFT, 80333 München (DE)
(72) Erfinder: BALL, Carsten, 76764 Rheinzabern (DE); DEINZER, Arnulf, 81476 München (DE)
(86) Internationale Anmeldenummer: PCT/DE2000/004364
(87) Internationale Veröffentlichungsnummer: WO 2001/043331

(56) Entgegenhaltungen:
- US-A- 5 537 416
- BAKHTIYARI S ET AL: "PRACTICAL IMPLEMENTATION OF A MOBILE DATA LINK PROTOCOL WITH A TYPE II HYBRID ARQ SCHEME AND CODE COMBINING" PROCEEDINGS OF THE VEHICULAR TECHNOLOGY CONFERENCE,US,NEW YORK, IEEE, Bd. CONF. 43, 18. Mai 1993 (1993-05-18), Seiten 774-777, XP000393297 ISBN: 0-7803-1267-8
- NOBELEN VAN R ET AL: "AN ADAPTIVE RADIO LINK PROTOCOL WITH ENHANCED DATA RATES FOR GSM EVOLUTION" IEEE PERSONAL COMMUNICATIONS,US,IEEE COMMUNICATIONS SOCIETY, Bd. 6, Nr. 1, Februar 1999 (1999-02), Seiten 54-64, XP000804156 ISSN: 1070-9916

## Beschreibung

Funkkommunikationssysteme erlauben neben verbindungsorientierter Datenübermittlung, die vornehmlich für die Übertragung von Sprachinformationen vorgesehen ist, auch paketorientierte Datenübermittlung, deren Anwendungsbereich überwiegend durch die Übermittlung von Dateninformationen gegeben ist. Beispielsweise werden in GSM-Mobilfunksystemen paketorientierte Dienste durch GPRS (General Packet Radio Services) bereitgestellt. GPRS ermöglicht theoretisch eine Datenübertragungsrate von 182 kb/s. In der Praxis beträgt die Datenübertragungsrate jedoch nur etwa 150 bis 170 kb/s.

Mobilfunksysteme der dritten Generation erfordern jedoch insbesondere für Multimediaanwendungen eine größere Bandbreite. EDGE (Enhanced Data Rates For GSM Evolution) stellt eine evolutionäre Weiterentwicklung von GSM dar und bietet die Möglichkeit, durch Einführung eines neuen Modulationsverfahrens die geforderten höheren Datenraten zu realisieren. Durch EDGE werden Datenübertragungsraten von etwa 384 kb/s ermöglicht. In EDGE enthalten sind die Komponenten EGPRS (Enhanced General Packet Radio Services) für paketorientierte Dienste und ECSD (Enhanced Circuit Switched Connections) für verbindungsorientierte Dienste. EDGE ist von der ETSI (European Telecommunications Standard Institut) standardisiert und ist für die Frequenzbänder 900 MHz, 1800 MHz, 1900 MHz, 850 MHz und 450 MHz vorgesehen. Dies bedeutet, daß EDGE in allen GSM-Frequenzbändern ohne Lizensierungsprobleme für bestehende GSM-Mobilfunknetzbetreiber genutzt werden kann. Der ETSI EDGE Standard stellt mit Link Adaptation und Incremental Redundancy zwei Verfahren zur effizienteren Nutzung der Funkschnittstelle bereit.

Link Adaptation sieht die Anpassung eines Modulations- und Codierschemas an die auf der Funkschnittstelle gemessenen Übertragungsbedingungen vor. Durch das Modulations- und Codierschema werden unter anderem Modulationsverfahren, Datenübertragungsrate und Coderate festgelegt. Mögliche Modulationsverfahren sind das GSM übliche GMSK (Gaussian Minimum Shift Keying) und das leistungsfähigere 8PSK (Phase Shift Keying). Bei 8PSK handelt es sich um ein lineares Modulationsverfahren, bei dem drei aufeinanderfolge Bits auf ein Symbol abgebildet werden, woraus sich acht verschiedene Symbolarten ergeben. Schlägt eine Übermittlung eines Datenblocks fehl, so wird dieser Datenblock gemäß Link Adaptation verworfen und eine erneute Übermittlung mit einem veränderten Modulationsund Codierschema angefordert.

Bei Anwendung von Incremental Redundancy werden im Rahmen eines fehlgeschlagenen Übermittlungsversuchs empfangene Datenblöcke gespeichert. Ist keine erfolgreiche Decodierung unter Hinzunahme im Rahmen früherer fehlgeschlagener Übermittlungsversuche gespeicherter Datenblöcke möglich, so wird eine wiederholte Übermittlung des Datenblocks angefordert. Die wiederholte Übermittlung eines Datenblocks erfolgt unter Beibehaltung des Modulations- und Codierschemas. Dagegen wird die Faltungscodierung für einen wiederholt zu sendenden Datenblock mit einem veränderten Punktierungsschema durchgeführt.

Aus EP 0 418 866 A2 ist ein Verfahren zur paketorientierten Datenübermittlung in einem Funk-Kommunikationssystem bekannt, bei dem zu übermittelnde Daten in Datenblöcke unterteilt, codiert, über eine Funkschnitt übertragen und decodiert werden. Eventuelle fehlgeschlagene Übermittlungsversuche werden beim Decodieren erkannt. Es wird eine erneute Übermittlung eines Datenblocks angefordert, der bei einem fehlgeschlagenen Übermittlungsversuch eines Datenblocks gesendet wurde. Ein fehlerhafter Datenblock, der bei einem fehlgeschlagenen Übermittlungsversuch eines Datenblocks empfangen wurde, wird in einem Speicher gesammelt. Ein zu sendender Datenblock wird stets mit einer die Reihenfolge des Datenblocks innerhalb eines Datenpakets kennzeichnenden Blocksequenznummer versehen. Diese Blocksequenznummer dient der Identifizierung eines Datenblocks, um für diesen bei einem Übermittlungsfehler anhand seiner Blocksequenznummer gezielt eine erneute Übermittlung anfordern zu können.

Der Erfindung liegt die Aufgabe zugrunde, ein Verfahren zur paketorientierten Datenübermittlung bei hohen Datenraten anzugeben, welches eine effiziente Ausnutzung von in einem Funk-Kommunikationssystem zur Verfügung stehender Speicherund Rechenkapazität ermöglicht.

Diese Aufgabe wird erfindungsgemäß durch ein Verfahren mit den im Anspruch 1 genannten Merkmalen gelöst. Vorteilhafte Weiterbildungen des erfindungsgemäßen Verfahrens sind den Ansprüchen 2 bis 13 zu entnehmen.

Beim erfindungsgemäßen Verfahren wird im Fall einer wiederholten Datenblockübermittlung eine die wiederholte Übermittlung kennzeichnende Information in den erneut zu sendenden Datenblock eingetragen, bevor dieser Datenblock über die Funkschnittstelle übertragen wird. Außerdem wird eine erneute Übermittlung eines Datenblocks angefordert, der bei einem fehlgeschlagenen Übermittlungsversuch gesendet wurde. Ein Datenblock, der bei einem fehlgeschlagenen Übermittlungsversuch empfangen wurde, wird empfängerseitig in einem Speicher gesammelt.

Ein wesentlicher Aspekt des erfindungsgemäßen Verfahrens ist darin zu sehen, daß bei einer erstmaligen Übermittlung eines Datenblocks ein Durchsuchen des Speichers nach Datenblöcken entfallen kann, die bei früheren fehlgeschlagenen Übermittlungsversuchen gesammelt wurden. Ein Durchsuchen des Speichers kann beispielsweise im Rahmen einer Fehlerbehebung oder bei einer Aktualisierung des Speichers erforderlich sein. Außerdem entspricht es dem Regelfall, daß ein Datenblock bereits beim ersten Übermittlungsversuch erfolgreich decodiert werden kann. Hingegen ist ein Durchsuchen des Speichers zur Wiedererkennung eines wiederholt gesendeten Datenblocks stets zeitaufwendig und bindet Speicher- und Rechenkapazität, die damit nicht für andere Prozesse zur Verfügung steht.

Vorzugsweise wird eine Information, die einen ersten oder einen zweiten Übertragungsmodus kennzeichnet, in einen Datenblock eingetragen, bevor dieser Datenblock über die Funkschnittstelle übertragen wird. Bei Erkennen einer den ersten Übermittlungsmodus kennzeichnenden Information wird eine erneute Übermittlung eines Datenblocks angefordert, der bei einem fehlgeschlagenen Übermittlungsversuch gesendet wurde. Außerdem wird dieser Datenblock empfängerseitig in einem Speicher gesammelt. Bei Erkennen einer den zweiten Übermittlungsmodus kennzeichnenden Information wird ein Datenblock verworfen, der bei einem fehlgeschlagenen Übermittlungsversuch empfangen wurde. Ein wesentlicher Aspekt dieser Weiterbildung ist darin zu sehen, daß ohne die einen Übermittlungsmodus kennzeichnende Information auch im zweiten Übertragungsmodus Datenblöcke, die bei einem fehlgeschlagenen Übermittlungsversuch empfangen wurden, völlig unnötigerweise empfängerseitig gespeichert würden, wodurch Speicher- und Prozeßkapazität gebunden wird.

Entsprechend einer weiteren vorteilhaften Weiterbildung des erfindungsgemäßen Verfahrens wird ein zu übermittelnder Datenblock mit einem Header (Datenkopf) versehen, in den die eine wiederholte Übermittlung kennzeichnende Information bzw. die einen Übermittlungsmodus kennzeichnende Information eingetragen wird. Entsprechend einer weiteren vorteilhaften Weiterbildung des erfindungsgemäßen Verfahrens läßt sich eine besonders einfache Realisierung erzielen, wenn zum Eintragen der entsprechenden Informationen jeweils ein Spare-Bit eines GPRS Uplink Headers (Enhanced General Packet Radio Services) genutzt wird.

Entsprechend einer weiteren vorteilhaften Ausgestaltung des erfindungsgemäßen Verfahrens werden die zu übermittelnden Daten unter Anwendung eines Punktierungsverfahrens faltungscodiert. Im Fall einer wiederholten Datenblockübermittlung wird das Punktierungsverfahren dabei mit einem veränderten Punktierungsschema durchgeführt. Dies bietet den Vorteil, daß den Datenblöcken, die während unterschiedlicher Übermittlungsversuche übertragen wurden, an jeweils unterschiedlichen Stellen Redundanz hinzugefügt bzw. entzogen wird. Für eine Decodierung unter Hinzunahme der bei früheren fehlgeschlagenen Übermittlungsversuchen gespeicherten Datenblöcke bietet dies den Vorteil, daß die Wahrscheinlichkeit sehr gering ist, daß innerhalb mehrerer Datenblöcke ein Übertragungsfehler an genau der gleichen Stelle mehrfach auftritt.

Die Erfindung wird nachfolgend an Ausführungsbeispielen anhand der Zeichnung näher erläutert. Es zeigt
Figur 1 ein Blockschaltbild eines Funk-Kommunikationssystems,
Figur 2 ein Ablaufdiagramm zur Veranschaulichung der Wirkungsweise der erfindungsgemäßen Verfahren,
Figur 3 einen ersten Typ eines EGPRS Uplink Headers nach dem Stand der Technik,
Figur 4 einen zweiten Typ eines EGPRS Uplink Headers nach dem Stand der Technik,
Figur 5 einen dritten Typ eines EGPRS Uplink Headers nach dem Stand der Technik,
Figur 6 einen ersten Typ eines EGPRS Uplink Headers in modifizierter Form,
Figur 7 einen zweiten Typ eines EGPRS Uplink Headers in modifizierter Form und
Figur 8 einen dritten Typ eines EGPRS Uplink Headers in modifizierter Form.

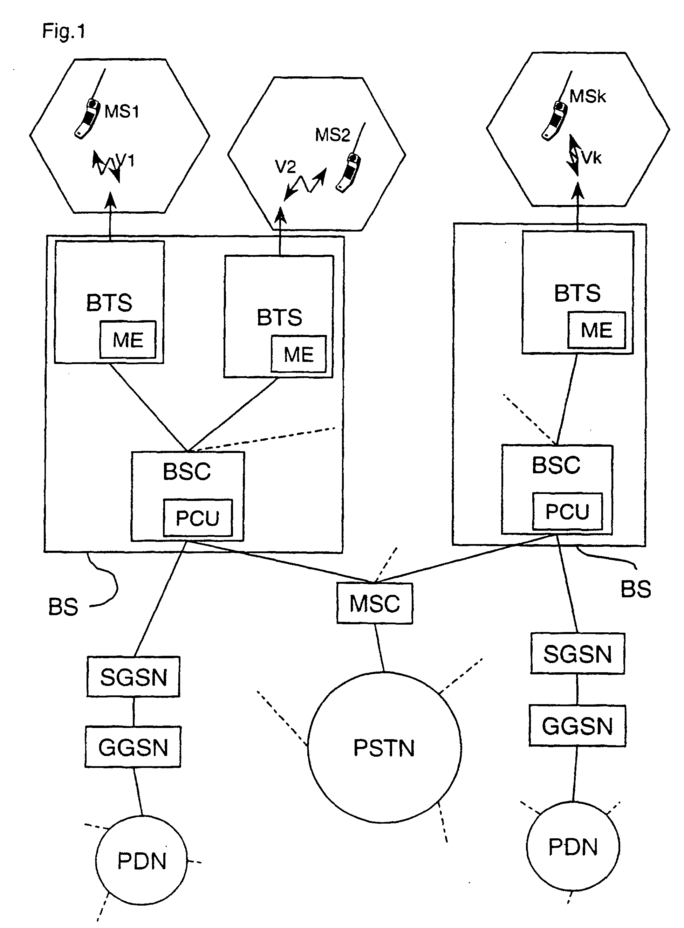

Das in Figur 1 dargestellte Funk-Kommunikationssystem entspricht in seiner Struktur einem bekannten GSM-Mobilfunknetz, das eine Vielzahl von Mobilvermittlungseinrichtungen MSC für verbindungsorientierte Dienste aufweist, die untereinander vernetzt sind und den Zugang zu einem Festnetz PSTN ermöglichen. Des weiteren sind die Mobilvermittlungseinrichtungen MSC zumindest mit einem Basisstationscontroller BSC verbunden. Durch jeden Basisstationscontroller BSC wird eine Verbindung zu zumindest einer Basis-Transceiverstation BTS ermöglicht. Basisstationscontroller BSC und zugeordnete Basis-Transceiverstationen BTS werden zu einem Basisstationssubsystem BS zusammengefaßt. Eine derartige Basis-Transceiverstation BTS kann über eine Funkschnittstelle eine Sprach- oder Datenverbindung zu Teilnehmerstationen MS1, MS2, MSk aufbauen.

Eine evolutionäre Weiterentwicklung von GSM stellt EDGE dar (Enhanced Data Rates for GSM Evolution). Durch EDGE werden Datenraten von 384 kb/s ermöglicht, während GSM eine maximale Datenübertragungsrate von 182 kb/s bietet. EDGE weist die Komponenten EGPRS (Enhanced General Packet Radio Services) für paketorientierte Dienste und ECSD (Enhanced Circuit Switched Connections) für verbindungsorientierte Dienste auf. Für paketorientierte Dienste ist eine Ankopplung des Basisstationscontroller BSC an ein Paketdatennetzwerk PDN (Packet Data Network) über einen Router SGSN (Serving GPRS Support Node) und ein Gateway GGSN (Gateway GPRS Support Node) vorgesehen.

In Figur 1 sind beispielhaft Verbindungen V1, V2 und Vk zur Übertragung von Nutz- und Signalisierungsinformationen zwischen Mobilstationen MS1, MS2, MSk und einer Basis-Transceiverstation BTS dargestellt. Ein nicht näher dargestelltes Operations- und Wartungszentrum nimmt Kontroll- und Wartungsfunktionen für vorgebbare Bereiche innerhalb des Mobilfunknetzes wahr. Die Funktionalität dieser Struktur ist grundsätzlich auch auf andere Funk-Kommunikationssysteme übertragbar, in denen die Erfindung zum Einsatz kommen kann, insbesondere für Teilnehmerzugangsnetze mit drahtlosem Teilnehmeranschluß.

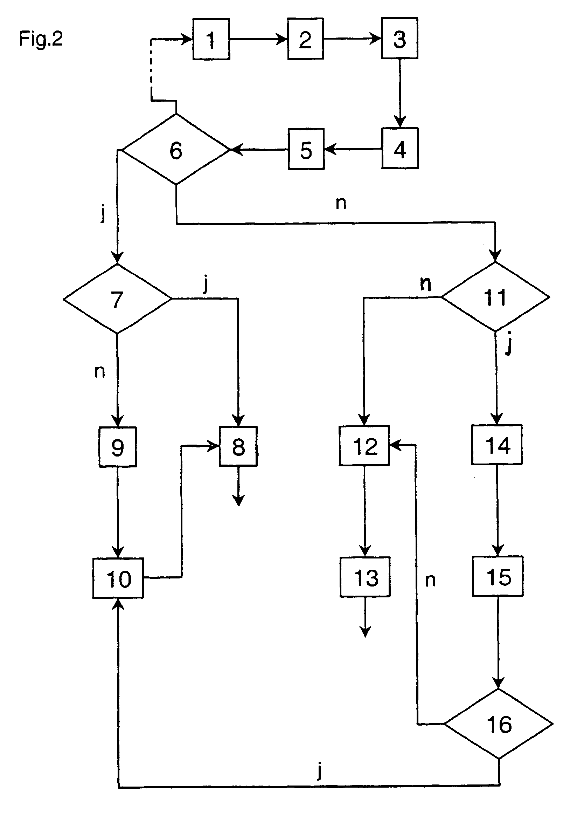

Das in Figur 2 dargestellte Ablaufdiagramm veranschaulicht die Wirkungsweise des erfindungsgemäßen Verfahrens zur paketorientierten Datenübermittlung. Für die folgenden Überlegungen wird angenommen, daß zu übermittelnde Daten von einer Teilnehmerstation MS1, MS2, MSk gesendet und von einer Basis-Transceiverstation BTS empfangen werden. Zu übermittelnde Daten werden zunächst in Datenblöcke unterteilt (Schritt 1) und anschließend vorzugsweise unter Anwendung eines Punktierungsverfahrens faltungscodiert (Schritt 2).

Falls eine wiederholte Datenblockübermittlung erfolgt, wird im nächsten Schritt entsprechend dem erfindungsgemäßen Verfahren senderseitig eine Information, die eine wiederholte Übermittlung kennzeichnet, in den wiederholt zu sendenden Datenblock eingetragen (Schritt 3). Entsprechend einer vorteilhaften Weiterbildung des erfindungsgemäßen Verfahrens ist vorgesehen, senderseitig eine Information, die einen Übermittlungsmodus kennzeichnet, in den zu übermittelnden Datenblock einzutragen (Schritt 3). Diese Information kann zusammen mit der eine wiederholte Übermittlung kennzeichnenden Information in den zu sendenden Datenblock eingetragen werden. Vorzugsweise werden die entsprechenden Informationen in einen Header des betreffenden Datenblocks eingetragen.

Danach wird der codierte Datenblock über die Funkschnittstelle übertragen (Schritt 4) und empfängerseitig decodiert (Schritt 5). Nachfolgend wird überprüft, ob das Decodieren des empfangenen Datenblocks erfolgreich verlief (Schritt 6).

War das Decodieren nicht erfolgreich, so gilt der Übermittlungsversuch als fehlgeschlagen. Wird außerdem eine Information erkannt, die einen zweiten Übertragungsmodus kennzeichnet, so wird der empfangene Datenblock verworfen, und eine erneute Übermittlung des nicht decodierbaren Datenblocks wird angefordert. Dies ist in Figur 2 durch die strichlierte Linie angedeutet, die Schritt 6 mit Schritt 1 verknüpft. Die wiederholte Datenblockübermittlung wird beispielsweise durch ein ARQ-Protokoll (Automatic Repeat Request) gesteuert, wobei die zugehörigen Funktionen empfängerseitig durch eine Steuerungseinrichtung PCU (Packet Control Unit) realisiert werden, die einem Basisstationscontroller BSC zugeordnet ist (siehe Figur 1). Bei einer wiederholten Datenblockübermittlung wird das Punktierungsverfahren vorteilhafterweise mit einem veränderten Punktierungsschema durchgeführt, wodurch die Stellen variiert werden, an denen innerhalb eines codierten Datenblocks Redundanzsymbole eingefügt werden. Das Punktierungsschema kann beispielsweise zyklisch verändert werden.

War das Decodieren gemäß Schritt 5 hingegen erfolgreich und wird außerdem eine Information erkannt, die einen ersten Übermittlungsmodus kennzeichnet, so wird geprüft, ob eine Information im empfangenen Datenblock enthalten ist, die eine wiederholte Übermittlung kennzeichnet (Schritt 7). Liegt keine Information vor, die eine wiederholte Übermittlung kennzeichnet, so wird die Datenblockübermittlung abgeschlossen (Schritt 8). Kennzeichnet die in den Datenblock eingetragene Information dagegen eine wiederholte Übermittlung, so wird ein Speicher ME, in dem Datenblöcke, die bei fehlgeschlagenen Übermittlungsversuchen empfangen wurden, gesammelt werden, nach Datenblöcke durchsucht, die bei früheren fehlgeschlagenen Übermittlungsversuche gespeichert wurden (Schritt 9). Der Speicher ME ist vorzugsweise einer Basis-Transceiverstation BTS zugeordnet (siehe Figur 1). Die gefundenen Datenblöcke werden anschließend gelöscht (Schritt 10), da das Decodieren bereits erfolgreich verlief und diese Datenblöcke daher für ein gemeinsames Decodieren (Joined Decoding) nicht mehr benötigt werden. Abschließend wird die Datenblockübermittlung beendet (Schritt 8).

War das Decodieren nach Schritt 5 nicht erfolgreich und wird außerdem eine den ersten Übermittlungsmodus kennzeichnende Information erkannt, so wird überprüft, ob der empfangene Datenblock eine Information enthält, die eine wiederholte Übermittlung kennzeichnet (Schritt 11). Falls der Datenblock erstmalig übertragen wurde, wird der Datenblock für eine spätere Fehlerbehebung gespeichert (Schritt 12). Anschließend wird eine wiederholte Übermittlung des entsprechenden Datenblocks mit verändertem Punktierungsschema angefordert (Schritt 13). Wurde der Datenblock dagegen wiederholt übermittelt, so wird der Speicher ME zu einer Fehlerbehebung nach Datenblöcken durchsucht, die bei früheren fehlgeschlagenen Übermittlungsversuchen gespeichert wurden (Schritt 14). Anschließend wird ein Decodierungsversuch gestartet, bei dem neben dem zuletzt empfangenen Datenblock auch die im Rahmen früherer fehlgeschlagener Übermittlungsversuche gespeicherten Datenblöcke einbezogen werden (Schritt 15). Nachfolgend wird überprüft, ob dieser Decodierungsversuch erfolgreich war (Schritt 16). Falls der Decodierungsversuch erfolgreich war, werden die im Rahmen früherer fehlgeschlagener Übermittlungsversuche gespeicherten Datenblöcke gelöscht (Schritt 10), und die Datenblockübermittlung wird abgeschlossen (Schritt 8). Führte das Decodieren nach Schritt 15 jedoch nicht zu einem Erfolg, so wird der zuletzt empfangene Datenblock ebenfalls abgespeichert (Schritt 12) und eine erneute Datenblockübermittlung angefordert (Schritt 13).

Der zweite Übertragungsmodus, bei dem fehlerhafte Datenblöcke verworfen und neu angefordert werden, ist hauptsächlich für die Übertragung von Daten mit Sprach- oder Bildinformationen per paketorientiertem Dienst vorgesehen. Eine wiederholte Datenübermittlung wäre hier problematisch, da dies zu unerwünschten Verzögerungen und Echos führen würde. Außerdem stehen leistungsfähige Mechanismen zur Verfügung, um fehlende Daten gegebenenfalls zu interpolieren.

In Anlehnung an das im ETSI EDGE Standard beschriebene Incremental Redundancy Verfahren wird ein wiederholt zu sendender Datenblock vorzugsweise unter Beibehaltung eines Modulationsund Codierschemas übermittelt. Durch das Modulations- und Codierschema werden Modulationsverfahren, Coderate und Datenrate vorgegeben.

Die eine wiederholte Übermittlung kennzeichnende Information bzw. die einen übermittlungsmodus kennzeichnende Information wird vorzugsweise während eines Uplinks durch eine Teilnehmerstation in einen Datenblock eingetragen. Die Problematik einer nicht zur Verfügung stehenden Information über eine wiederholte Datenblockübermittlung oder eines nicht bekannten Übertragungsmodus kann für den Downlink durch eine geeignete Hardwarearchitektur umgangen werden, bei der die Steuerungseinheit zur Umsetzung des ARQ-Protokolls und der Speicher für die nicht decodierbaren Datenblöcke auf physikalischer Ebene direkt miteinander gekoppelt sind.

Im Hinblick auf den Uplink gestaltet sich eine derartige Hardwarearchitektur dagegen deutlich schwieriger, da der Speicher ME für die nicht decodierbaren Datenblöcke einer Basis-Transceiverstation BTS zugeordnet ist, während Steuerungseinrichtung PCU zur Umsetzung des ARQ-Protokolls üblicherweise in einem Basisstationscontroller BSC angeordnet ist. In diesem Fall sind Steuerungseinrichtung PCU und Speicher ME räumlich voneinander getrennt. Im Sinne einer möglichst geringen Inanspruchnahme von Übertragungskapazitäten, die an der Schnittstelle zwischen Basis-Transceiverstation BTS und Basisstationscontroller BSC bereitstehen, wird auf eine direkte Kopplung auf physikalischer Ebene zwischen der Steuerungseinrichtung PCU und dem Speicher ME verzichtet. Zudem sprechen Kostenerwägungen dafür, die Steuerungseinrichtung PCU nicht lokal bei jeder Basis-Transceiverstation BTS anzuordnen, sondern lediglich bei einem Basisstationscontroller BSC. Des weiteren ist eine Änderung von festgelegten Hardwarearchitekturen insbesondere in Mobilfunksystem nicht ohne weiteres zu realisieren, da es dabei eine Vielzahl von Wechselwirkungen zwischen einzelnen Systemkomponenten zu berücksichtigen gilt.

Im Uplink übertragene Datenblöcke werden somit vorzugsweise innerhalb einer Basis-Transceiverstation BTS decodiert. Entsprechendes gilt für die Auswertung der Information, die eine wiederholte Übermittlung oder einen Übertragungsmodus kennzeichnet. Das Speichern oder Verwerfen eines bei einem fehlgeschlagenen Übermittlungsversuch empfangenen Datenblocks wird ebenfalls vorzugsweise innerhalb der Basis-Transceiverstation BTS vorgenommen.

In Anlehnung an das aus dem ETSI EDGE Standard bekannte Link Adaptation Verfahren wird bei mangelnder Kapazität des Speichers ME ein Datenblock verworfen, der bei einem fehlgeschlagenen Übermittlungsversuch empfangen wurde, wobei eine wiederholte Datenblockübermittlung unter Variation des Modulations- und Codierschemas erfolgt. Durch das Modulations- und Codierschema werden Modulationsverfahren, Coderate und Datenrate vorgegeben. Der wiederholt zu sendende Datenblock wird zweckmäßigerweise unter Beibehaltung des Punktierungsschemas übermittelt, da keine Speicherung nicht decodierbarer Datenblöcke mit dem Ziel einer späteren gemeinsamen Decodierung vorgesehen ist.

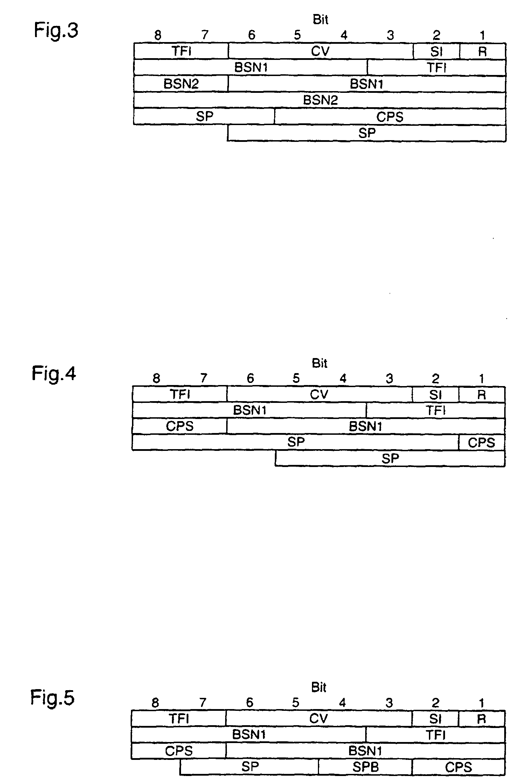

Entsprechend einer besonders bevorzugten Ausführungsform wird sowohl die eine wiederholte Übermittlung kennzeichnende Information als auch die einen Übertragungsmodus kennzeichnende Information jeweils in ein Spare-Bit eines EGPRS Uplink Headers eingetragen. Die in den Figuren 3 bis 5 dargestellten EGPRS Uplink Header sind durch den ETSI GSM Standard 04.60 Version 8.0.0 spezifiziert. Die unterschiedlichen Headertypen werden entsprechend den bei der Übermittlung verwendeten Modulations- und Codierschemata zugeordnet, die in der nachstehenden Tabelle zusammengefaßt sind.

| Modulations- und Codierschema | Coderate | Modulations-verfahren | Maximale Datenrate [kb/s] |
|---|---|---|---|
| MCS-9 | 1,0 | 8PSK | 59,2 |
| MCS-8 | 0,92 | | 54,4 |
| MCS-7 | 0,76 | | 44,8 |
| MCS-6 | 0,49 | | 29,6 |
| MCS-5 | 0,37 | | 22,4 |
| MCS-4 | 1,0 | GMSK | 17,6 |
| MCS-3 | 0,80 | | 14,8 |
| MCS-2 | 0,66 | | 11,2 |
| MCS-1 | 0,53 | | 8,8 |

Ein erster in Figur 3 dargestellter Typ eines EGPRS Uplink Headers ist für Modulations- und Coderschema MCS-7, MCS-8 und MCS-9 vorgesehen. In Figur 4 ist ein zweiter Typ eines EGPRS Uplink Headers dargestellt, der in Zusammenhang mit dem Modulations- und Codierschema MCS-5 oder MCS-6 verwendet wird. Für die Modulations- und Codierschemata MCS-1, MCS-2, MCS-3 und MCS-4 wird ein in Figur 5 dargestellter dritter Typ eines EGPRS Uplink Headers verwendet. Die Header gemäß Figur 3 bis Figur 5 enthalten ein Retry-Bit R, ein Stall Indicator Bit SI, ein Countdown Value Feld CV, ein Temporary Flow Identifier Feld TFI, Block Sequence Number Feld BSN und ein Coding and Puncturing Scheme Indicator Feld CPS. Daneben weist jeder der in Figur 3 bis Figur 5 dargestellten EGPRS Uplink Header mehrere zur Verfügung stehende Spare-Bits SP auf. Die genauen Bedeutungen der genannten Bits und Felder sind dem ETSI GSM Standard 04.60 Version 8.0.0 zu entnehmen.

Das Temporary Flow Identifier Feld TFI dient der Kennzeichnung eines Datenstromes, der zu einer bestimmten Teilnehmerstation gerichtet ist und ermöglicht damit die Zuordnung eines Datenstromes zu einer Teilnehmerstation. Das Block Sequence Number Feld BSN enthält eine Nummer eines Datenblocks innerhalb eines Datenstroms. Enthalten die Header bzw. Datenblöcke keine Information, die eine wiederholte Datenblockübermittlung kennzeichnen, so muß der Speicher ME nach Temporary Flow Identifier Werten und Block Sequence Number Werten durchsucht werden, um zu überprüfen, ob ein empfangener Datenblock wiederholt gesendet wurde oder nicht. Diese Vorgehensweise erfordert jedoch verhältnismäßig viel Zeit und verursacht einen unnötigen Verbrauch von Systemressourcen.

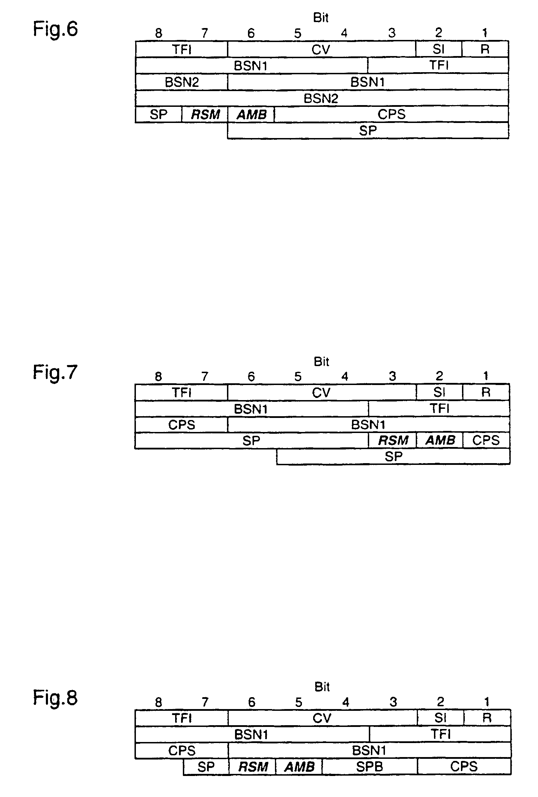

In den Figuren 6 bis 8 sind EGPRS Uplink Header in modifizierter Form dargestellt, bei denen jeweils ein Spare-Bit zur Übertragung der Information, die eine wiederholte Übermittlung kennzeichnet, und der Information, die einen Übertragungsmodus kennzeichnet, belegt wird. Der in Figur 6 dargestellte EGPRS Uplink Header ist für die Modulations- und Codierschemata MCS-7, MCS-8 und MCS-9 vorgesehen, während der in Figur 7 dargestellte EGPRS Uplink Header im Zusammenhang mit den Modulations- und Codierschemata MCS-5 und MCS-6 verwendet wird. Der in Figur 8 dargestellte EGPRS Uplink Header ist für die Modulations- und Codierschemata MCS-1, MCS-2, MCS-3 und MCS-4 vorgesehen. In den Figuren 6 bis 8 ist jeweils ein erstes neu eingeführtes Bit RSM (Retransmission with same Modulation and Coding Scheme) erkennbar, in dem die eine wiederholte Übermittlung kennzeichnende Information enthalten ist. In einem zweiten neu eingeführten Bit AMB (Acknowledge Mode Bit) ist die einen Übertragungsmodus kennzeichnende Information enthalten. Wie durch die Figuren 6 bis 8 verdeutlicht, lassen sich die genannten Informationen auf einfachste Weise in bestehende Header eintragen.

## Patentansprüche

1. Verfahren zur paketorientierten Datenübermittlung in einem Funk-Kommunikationssystem, bei dem
- zu übermittelnde Daten in Datenblöcke unterteilt, codiert, über eine Funkschnittstelle übertragen und decodiert werden,
- eventuelle fehlgeschlagene Übermittlungsversuche beim Decodieren erkannt werden,
- eine erneute Übermittlung eines Datenblocks angefordert wird, der bei einem fehlgeschlagenen Übermittlungsversuch gesendet wurde,
- ein fehlerhafter Datenblock, der bei einem fehlgeschlagenen Übermittlungsversuch empfangen wurde, in einem Speicher (ME) gesammelt wird,
**dadurch gekennzeichnet, daß**
- im Fall einer wiederholten Datenblockübermittlung eine die wiederholte Übermittlung kennzeichnende Information (RSM) in den erneut zu sendenden Datenblock eingetragen wird, bevor dieser Datenblock über die Funkschnittstelle übertragen wird,
- nur bei einer in einem empfangenen Datenblock enthaltenen Information (RSM), die eine wiederholte Übermittlung kennzeichnet, der Speicher (ME) zu einer Fehlerbehebung nach fehlerhaften Datenblöcken durchsucht wird, die bei früheren fehlgeschlagenen Übermittlungsversuchen gesammelt wurden.

2. Verfahren nach Anspruch 1,
**dadurch gekennzeichnet, daß**
- eine einen ersten Übermittlungsmodus oder einen zweiten Übermittlungsmodus kennzeichnende Information (AMB) in einen Datenblock eingetragen wird, bevor dieser Datenblock über die Funkschnittstelle übertragen wird
- diese Information (AMB) im Fall eines fehlgeschlagenen Übermittlungsversuchs ausgewertet wird,
und daß nur bei Erkennen einer den ersten Übermittlungsmodus kennzeichenden Information
- die erneute Übermittlung des Datenblocks angefordert wird, der bei einem fehlgeschlagenen Übermittlungsversuch gesendet wurde,
- der Datenblock, der bei einem fehlgeschlagenen Übermittlungsversuch empfangen wurde, in dem Speicher (ME) gesammelt wird,
- im Fall einer wiederholten Datenblockübermittlung eine die wiederholte Übermittlung kennzeichnende Information (RSM) in den erneut zu sendenden Datenblock eingetragen wird, bevor dieser Datenblock über die Funkschnittstelle übertragen wird,
- nur bei einer in einem empfangenen Datenblock enthaltenen Information (RSM), die eine wiederholte Übermittlung kennzeichnet, der Speicher (ME) zu einer Fehlerbehebung nach Datenblöcken durchsucht wird, die bei früheren fehlgeschlagenen Übermittlungsversuchen gesammelt wurden,
und daß bei Erkennen einer den zweiten Übermittlungsmodus kennzeichenden Information ein Datenblock, der bei einem fehlgeschlagenen Übermittlungsversuch empfangen wurde, verworfen wird.

3. Verfahren nach einem der Ansprüche 1 bis 2,
**dadurch gekennzeichnet, daß** ein zu übermittelnder Datenblock mit einem Header versehen wird, und daß die eine wiederholte Übermittlung kennzeichnende Information (RSM) und/oder die einen Übermittlungsmodus kennzeichnende Information (AMB) in den Header eingetragen werden/wird.

4. Verfahren nach einem der Ansprüche 1 bis 3,
**dadurch gekennzeichnet, daß** die zu übermittelnden Daten unter Anwendung eines Punktierungsverfahrens faltungscodiert werden, und daß im Fall einer wiederholten Datenblockübermittlung das Punktierungsverfahren mit einem veränderten Punktierungsschema durchgeführt wird.

5. Verfahren nach Anspruch 4,
**dadurch gekennzeichnet, daß** das Punktierungsschema zyklisch variiert wird.

6. Verfahren nach einem der Ansprüche 1 bis 5,
**dadurch gekennzeichnet, daß** ein wiederholt zu sendender Datenblock unter Beibehaltung eines Modulations- und Codierschemas übermittelt wird, wobei durch das Modulations- und Codierschema Modulationsverfahren, Coderate und Datenrate vorgegeben werden.

7. Verfahren nach einem der Ansprüche 1 bis 6,
**dadurch gekennzeichnet, daß** die eine wiederholte Übermittlung kennzeichnende Information (RSM) und/oder die einen Übermittlungsmodus kennzeichnende Information (AMB) während eines Uplinks durch eine Teilnehmerstation (MS1, MS2, MSk) in einen Datenblock eingetragen werden/wird.

8. Verfahren nach Anspruch 7,
**dadurch gekennzeichnet, daß** ein empfangener und/oder gespeicherter Datenblock innerhalb einer Basis-Transceiverstation (BTS) decodiert werden/wird.

9. Verfahren nach einem der Ansprüche 7 oder 8,
**dadurch gekennzeichnet, daß** die eine wiederholte Übermittlung kennzeichnende Information (RSM) und/oder die einen Übermittlungsmodus kennzeichnende Information (AMB) innerhalb einer Basis-Transceiverstation (BTS) ausgewertet werden/wird.

10. Verfahren nach einem der Ansprüche 7 bis 9,
**dadurch gekennzeichnet, daß** das Speichern oder Verwerfen eines bei einem fehlgeschlagenen Übermittlungsversuch empfangenen Datenblocks innerhalb einer Basis-Transceiverstation (BTS) vorgenommen wird.

11. Verfahren nach einem der Ansprüche 1 bis 10,
**dadurch gekennzeichnet, daß** die eine wiederholte Übermittlung kennzeichnende Information (RSM) und/oder die einen Übermittlungsmodus kennzeichnende Information (AMB) jeweils in ein Spare-Bit eines Enhanced General Packet Radio Services Uplink Headers (EGPRS-Headers) eingetragen werden/wird.

12. Verfahren nach einem der Ansprüche 1 bis 11,
**dadurch gekennzeichnet, daß** bei mangelnder Kapazität des Speichers (ME)
- ein Datenblock, der bei einem fehlgeschlagenen Übermittlungsversuch empfangen wurde, verworfen wird,
- im Fall einer fehlgeschlagenen Datenübermittlung eine wiederholte Datenübermittlung unter Variation eines Modulations- und Codierschemas erfolgt, wobei durch das Modulations- und Codierschema Modulationsverfahren, Coderate und Datenrate vorgegeben werden.

13. Verfahren nach Anspruch 12,
**dadurch gekennzeichnet, daß** bei mangelnder Kapazität des Speichers (ME) ein wiederholt zu sendender Datenblock unter Beibehaltung des Punktierungsschemas übermittelt wird.

## Claims

1. Method for packet-oriented data transmission in a radio communications system, in which
- data to be transmitted are divided into data blocks, are coded, are transmitted via a radio interface and are decoded,
- any failed transmission attempts are recognized during the decoding,
- retransmission of a data block sent during a failed transmission attempt is requested,
- an erroneous data block received during a failed transmission attempt is collected in a memory (ME),
**characterized in that**
- in the case of a repeat data block transmission, an information item (RSM) identifying the repeat transmission is entered into the data block which is to be resent before this data block is transmitted via the radio interface,
- just in the case of a received data block containing an information item (RSM) identifying a repeat transmission, the memory (ME) is searched for erroneous data blocks collected during earlier failed transmission attempts, for the purposes of error elimination.

2. Method according to Claim 1,
**characterized in that**
- an information item (AMB) identifying a first transmission mode or a second transmission mode is entered into a data block before this data block is transmitted via the radio interface,
- this information item (AMB) is evaluated in the event of a failed transmission attempt,
and **in that**, just if an information item identifying the first transmission mode is recognized,
- retransmission of the data block sent during a failed transmission attempt is requested,
- the data block received during a failed transmission attempt is collected in the memory (ME),
- in the case of a repeat data block transmission, an information item (RSM) identifying the repeat transmission is entered into the data block which is to be resent before this data block is transmitted via the radio interface,
- just in the case of a received data block containing an information item (RSM) identifying a repeat transmission, the memory (ME) is searched for data blocks collected during earlier failed transmission attempts, for the purposes of error elimination,
and **in that**, if an information item identifying the second transmission mode is recognized, a data block received during a failed transmission attempt is rejected.

3. Method according to one of Claims 1 to 2,
**characterized in that** a data block to be transmitted is provided with a header, and **in that** the information item (RSM) identifying a repeat transmission and/or the information item (AMB) identifying a transmission mode are/is entered into the header.

4. Method according to one of Claims 1 to 3,
**characterized in that** the data to be transmitted are subjected to convolutional coding using a puncturing method, and **in that**, in the case of a repeat data block transmission, the puncturing method is carried out using an altered puncturing scheme.

5. Method according to Claim 4,
**characterized in that** the puncturing scheme is varied cyclically.

6. Method according to one of Claims 1 to 5,
**characterized in that** a data block to be sent as a repeat is transmitted while retaining a modulation and coding scheme, the modulation and coding scheme prescribing modulation method, coding rate and data rate.

7. Method according to one of Claims 1 to 6,
**characterized in that** the information item (RSM) identifying a repeat transmission and/or the information item (AMB) identifying a transmission mode are/is entered into a data block by a subscriber station (MS1, MS2, MSk) during an uplink.

8. Method according to Claim 7,
**characterized in that** a received and/or stored data block are/is decoded within a base transceiver station (BTS) .

9. Method according to one of Claims 7 or 8,
**characterized in that** the information item (RSM) identifying a repeat transmission and/or the information item (AMB) identifying a transmission mode are/is evaluated within a base transceiver station (BTS).

10. Method according to one of Claims 7 to 9,
**characterized in that** a data block received during a failed transmission attempt is stored or rejected within a base transceiver station (BTS).

11. Method according to one of Claims 1 to 10,
**characterized in that** the information item (RSM) identifying a repeat transmission and/or the information item (AMB) identifying a transmission mode are/is respectively entered into a spare bit of an Enhanced General Packet Radio Services uplink header (EGPRS header).

12. Method according to one of Claims 1 to 11,
**characterized in that**, if the memory (ME) has insufficient capacity,
- a data block received during a failed transmission attempt is rejected,
- in the case of a failed data transmission, a repeat data transmission is effected while varying a modulation and coding scheme, the modulation and coding scheme prescribing modulation method, code rate and data rate.

13. Method according to Claim 12,
**characterized in that**, if the memory (ME) has insufficient capacity, a data block to be sent as a repeat is transmitted while retaining the puncturing scheme.

## Revendications

1. Procédé de transmission de données par paquets dans un système de communication radio, dans lequel
- des données à transmettre sont divisées en blocs de données, codées, transmises par l'intermédiaire d'une interface radio et décodées,
- d'éventuelles tentatives de transmission échouées sont reconnues lors du décodage,
- une nouvelle transmission d'un bloc de données, émis lors d'une tentative de transmission échouée, est demandée,
- un bloc de données erroné, reçu lors d'une tentative de transmission échouée, est collecté dans une mémoire (ME),
**caractérisé en ce que**
- en cas de transmission répétée d'un bloc de données, une information (RSM) identifiant la transmission répétée est enregistrée dans le bloc de données à ré-émettre avant que ce bloc de données ne soit transmis par l'intermédiaire de l'interface radio,
- seulement en présence d'une information (RSM) contenue dans un bloc de données reçu, identifiant une transmission répétée, la mémoire (ME), dans le but d'éliminer l'erreur, est scrutée pour trouver des blocs de données erronés collectés lors de tentatives de transmission échouées antérieures.

2. Procédé selon la revendication 1,
**caractérisé en ce que**
- une information (AMB) identifiant un premier mode de transmission ou un deuxième mode de transmission est enregistrée dans un bloc de données avant que ce bloc de données ne soit transmis par l'intermédiaire de l'interface radio,
- cette information (AMB) est exploitée en cas de tentative de transmission échouée,
et **en ce que** seulement lorsqu'une information identifiant le premier mode de transmission est reconnue
- la nouvelle transmission du bloc de données, émis lors d'une tentative de transmission échouée, est demandée,
- le bloc de données, reçu lors d'une tentative de transmission échouée, est collecté dans la mémoire (ME),
- en cas de transmission répétée d'un bloc de données, une information (RSM) identifiant la transmission répétée est enregistrée dans le bloc de données à ré-émettre avant que ce bloc de données ne soit transmis par l'intermédiaire de l'interface radio,
- seulement en présence d'une information (RSM) contenue dans un bloc de données reçu, identifiant une transmission répétée, la mémoire (ME), dans le but d'éliminer l'erreur, est scrutée pour trouver des blocs de données collectés lors de tentatives de transmission échouées antérieures,
et **en ce que** lorsqu'une information identifiant le deuxième mode de transmission est reconnue, un bloc de données, reçu lors d'une tentative de transmission échouée, est rejeté.

3. Procédé selon l'une des revendications 1 à 2,
**caractérisé en ce qu'**un bloc de données à transmettre est muni d'un header et **en ce que** l'information (RSM) identifiant une transmission répétée et/ou l'information (AMB) identifiant un mode de transmission sont enregistrées dans le header.

4. Procédé selon l'une des revendications 1 à 3,
**caractérisé en ce que** les données à transmettre sont codées selon un code de convolution en appliquant un procédé de perforation et **en ce qu'**en cas de transmission de données répétée, le procédé est conduit avec un schéma de perforation modifié.

5. Procédé selon la revendication 4,
**caractérisé en ce que** le schéma de perforation est varié cycliquement.

6. Procédé selon l'une des revendications 1 à 5,
**caractérisé en ce qu'**un bloc de données à émettre de façon répétée est transmis en conservant un schéma de modulation et de codage, le schéma de modulation et de codage imposant le procédé de modulation, le débit de codes et le débit de données.

7. Procédé selon l'une des revendications 1 à 6,
**caractérisé en ce que** l'information (RSM) identifiant une transmission répétée et/ou l'information (AMB) identifiant un mode de transmission sont enregistrées pendant un uplink par une station d'abonné (MS1, MS2, MSk) dans un bloc de données.

8. Procédé selon la revendication 7,
**caractérisé en ce qu'**un bloc de données reçu et/ou mis en mémoire est décodé à l'intérieur d'une station émettrice/réceptrice de base (BTS).

9. Procédé selon l'une des revendications 7 ou 8,
**caractérisé en ce que** l'information (RSM) identifiant une transmission répétée et/ou l'information (AMB) identifiant un mode de transmission sont exploitées à l'intérieur d'une station émettrice/réceptrice de base (BTS).

10. Procédé selon l'une des revendications 7 à 9,
**caractérisé en ce que** la mise en mémoire ou le rejet d'un bloc de données, reçu lors d'une tentative de transmission échouée, est opéré(e) à l'intérieur d'une station émettrice/réceptrice de base (BTS).

11. Procédé selon l'une des revendications 1 à 10,
**caractérisé en ce que** l'information (RSM) identifiant une transmission répétée et/ou l'information (AMB) identifiant un mode de transmission sont enregistrées chacune dans un Spare Bit d'un Enhanced General Packet Radio Services Uplink Header (Header EGPRS).

12. Procédé selon l'une des revendications 1 à 11,
**caractérisé en ce qu'**en cas de capacité insuffisante de la mémoire (ME)
- un bloc de données reçu lors d'une transmission de données échouée est rejeté,
- en cas de transmission de données échouée, une transmission de données répétée est effectuée en variant un schéma de modulation et de codage, le schéma de modulation et de codage imposant le procédé de modulation, le débit de codes et le débit de données.

13. Procédé selon la revendication 12,
**caractérisé en ce qu'**en cas de capacité insuffisante de la mémoire (ME) un bloc de données à émettre de façon répétée est transmis en conservant le schéma de perforation.
